# EUROPEAN PATENT APPLICATION

(11) **EP 2 698 299 A1**
(43) Date of publication of application: **19.02.2014**
(21) Application number: 13180207.6
(22) Date of filing: 13.08.2013
(51) Int. Cl.: B60W 40/06, B60W 50/00, B60K 31/00, G01S 13/88, G01B 21/18, G01B 7/26, G01B 11/22, G01S 13/94

(54) **Water depth detection for a road vehicle**

(30) Priority: 13.08.2012 GB 201214358
(71) Applicant: Nissan Motor Manufacturing (UK) Ltd., Cranfield Bedfordshire MK43 0DB (GB)
(72) Inventor: Webb, Michael, Cranfield, Bedfordshire MK430DB (GB)

(57) **Abstract**

A road vehicle 1 comprising a primary sensor set 10, 11 is described. The primary sensor set 10, 11 is arranged to detect water depth at a first set of locations within an environment external to the vehicle 1. The first set of locations are spaced relative to the vehicle so that the extent of the vehicle's submergence at the first set of locations can be predicted before the vehicle travels to at least one of the first set of locations.

## Description

### Field of the invention

The present invention concerns improvements relating to systems and methods for detecting water depth. Moreover, the present invention concerns systems and methods for detecting water depth within an environment external to a road vehicle so that the extent of the road vehicle's submergence in a body of water can be detected.

### Background to the invention

There is currently a problem in many countries where weather conditions can create large areas of flooded road. Drivers attempt to pass through such flooded areas despite not knowing the depth of the water, as it can be impractical to find another route. This can lead to damage to the vehicle, especially if the water reaches a level that affects the electrical systems or floods the combustion system of the engine. Some road vehicles which have off-road capabilities are specifically designed to operate in relatively deep water, for example, by waterproofing the electrical systems and positioning the air intake at an elevated position. However, virtually every road vehicle has a water depth limit beyond which it suffers water damage.

A driver rarely knows what the water depth limit of a vehicle is, and in any case, it can be difficult for the driver to gauge the actual depth of the water that the vehicle is in, and moreover, that the driver intends to drive the vehicle through. Furthermore, it is often impossible for the driver to see the topology of the ground below the water level, and so the driver therefore cannot determine how the water depth ahead of the vehicle changes and whether there are obstacles below the surface of the water that the driver should avoid.

It is against this background that the present invention has been conceived.

### Summary of the Invention

According to a first aspect of the present invention there is provided a road vehicle comprising a primary sensor set arranged to detect water depth at a first set of locations within an environment external to the vehicle, the locations being spaced relative to the vehicle so that the extent of the vehicle's submergence at the first set of locations can be predicted before the vehicle travels to at least one of the first set of locations. Advantageously, it is therefore possible to determine in advance whether it is safe for the vehicle to proceed to at least one of the first set of locations.

Optionally, the first set of locations includes a plurality of locations that are spaced relative to one another. Optionally, the first set of locations are substantially in front of the vehicle, within the vehicle's path of forward travel. Optionally, the first set of locations are distributed either side of the vehicles path of forward travel, within the vehicle's forward turning path. Optionally, the first set of locations are distributed substantially behind the vehicle, within the vehicle's reverse path of travel. Optionally, the first set of locations are either side of the vehicle's reverse path of travel, within the vehicle's reverse turning path. Optionally, the first set of locations are distributed over a first area to enable a water depth map of that first area to be determined. Optionally, the first set of locations are distributed over a first area to enable a topological map of a ground surface at that first area to be determined. Optionally, the primary sensor set comprises bathymetric sensors. Optionally, the primary sensor set comprises at least one of LIDAR sensors and ultrasonic sensors.

Optionally, the road vehicle comprises a secondary sensor set arranged to detect water depth at a second set of locations on or immediately adjacent to the vehicle so that the immediate extent of the vehicle's submergence can be determined. Optionally, the second set of locations includes a plurality of locations that are distributed substantially about the vehicle to enable the orientation of the vehicle's submergence below a surface of water to be determined. Optionally, the primary and/or secondary sensor set are arranged to detected the occurrence, extent, position and/or movement of a bow wave relative to the vehicle.

Optionally, the road vehicle further comprises a user interface arranged to provide feedback to the vehicle driver in dependence on the water depth at said first and/or second set of locations. Optionally, the user interface is arranged to provide an indication to the vehicle driver of the calculated water depth at said first and/or second set of locations. Optionally, the user interface is arranged to provide an indication to the vehicle driver of a water depth limit of the vehicle relative to the calculated water depth at said first and/or second set of locations. Optionally, the user interface is arranged to provide an indication to the vehicle driver of the distance and/or direction to a vehicle position at which a water depth limit of the vehicle will be reached. Optionally, the user interface is arranged to provide guidance to the vehicle driver of a route and/or speed through a water course. Optionally, the user interface is arranged to provide guidance to the vehicle driver of a route through a water course that avoids submerged obstacles. Optionally, the user interface is arranged to display to the vehicle driver of a water depth map of an area in the vicinity of the vehicle. Optionally, the user interface is arranged to issue a warning to the vehicle driver of an approaching water depth limit. Optionally, the user interface comprises at least one of audio, haptic and visual feedback means.

Optionally, the road vehicle further comprises a controller. The controller may be arranged to control at least one of a speed, a gear and a suspension height of the vehicle in response to the calculated water depth at said first and/or second set of locations. Optionally, the road vehicle comprises at least one orientation sensor arranged to detect the orientation of the vehicle, said detected orientation being used to enhance the calculation of water depth at said first and/or second set of locations.

According to a second aspect of the present invention there is provided a water depth detection system for a road vehicle comprising a primary sensor set arranged to detect water depth at a first set of locations within an environment external to the vehicle, the locations being spaced relative to the vehicle so that the extent of the vehicle's submergence at the first set of locations can be predicted before the vehicle travels to at least one of the first set of locations.

According to a third aspect of the present invention there is provided a method for use on a road vehicle, comprising providing a primary sensor set onto a road vehicle so that the primary sensor set can detect water depth at a first set of locations within an environment external to the vehicle, the locations being spaced relative to the vehicle so that the extent of the vehicle's submergence at the first set of locations can be predicted before the vehicle travels to at least one of the first set of locations.

It will further be understood that features or advantages of different aspects of the present invention may be combined or substituted where context allows.

### Brief description of the drawings

Embodiments of the present invention will now be described, by way of example only, with reference to the accompanying drawings, in which:
Figure 1 shows a schematic side view of a road vehicle according to a first embodiment of the present invention;
Figure 2 shows a schematic overhead view of the road vehicle of Figure 1;
Figure 3 shows a schematic side view of the road vehicle of Figure 1 on a down-hill approach to a relatively shallow water course;
Figure 4 shows a schematic side view of the road vehicle of Figure 1 within a relatively shallow water course; and
Figure 5 shows a schematic side view of the road vehicle of Figure 1 within a relatively deep water course.

### Specific description of the embodiments of the invention

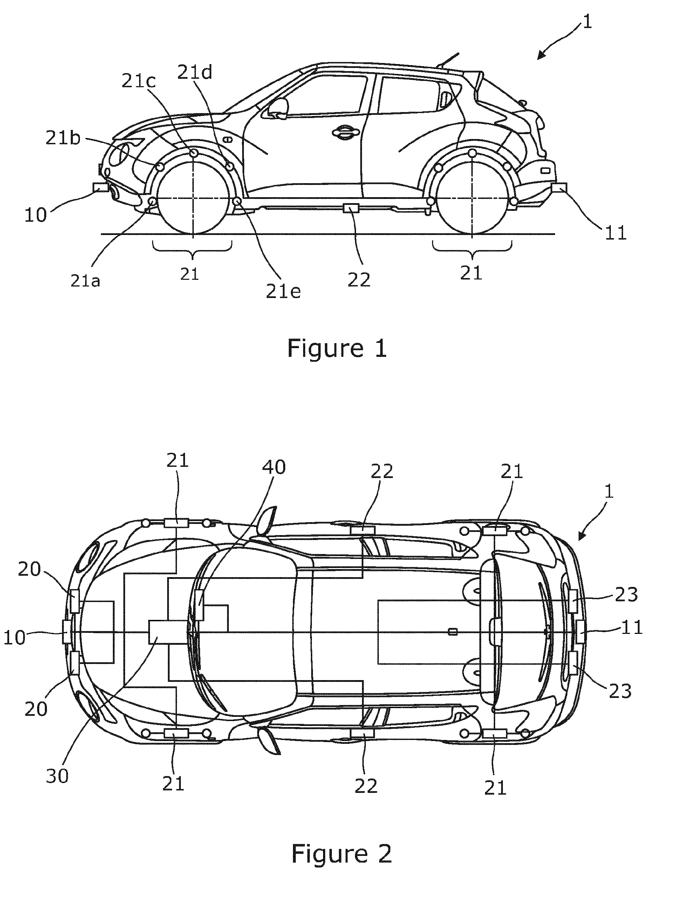

Figures 1 and 2 respectively show a schematic side view and a schematic overhead view of a road vehicle 1 according to a first embodiment of the present invention. The road vehicle 1 comprises a primary sensor set in the form of bathymetric LIDAR (Light Detection And Ranging) sensors. A front LIDAR sensor 10 is mounted at the front of the vehicle, and a rear LIDAR sensor 11 is mounted at the rear of the vehicle 1. The vehicle further comprises a secondary sensor set in the form of float switches which are distributed at various positions about the vehicle. In particular, a first group of float switches 20 are located at the front of the vehicle, a second group of float switches 21 are located about each the vehicle's wheel arches, a third group of float switches 22 are located at the sides of the vehicle and a fourth group of float switches 23 are located at the rear of the vehicle.

The road vehicle 1 further comprises a central controller 30 and a user interface 40. The central controller 30 is operatively linked to the primary 10, 11 and secondary sensors 20, 21, 22, 23 as well as the user interface 40 via an on-board data network. Signals from the primary and secondary sensors are received and processed by the central controller 30. The central controller 30 then transmits information to the user interface 40 which subsequently provides feedback to the vehicle driver about environmental conditions, especially the current or predicted submergence of the road vehicle within a water course as detected by the primary sensors 10, 11 and secondary sensors 20, 21, 22, 23.

Furthermore, the central controller 30 via the on-board data network can also receive information from other sensors on the vehicle 1, such as those detecting the orientation of the vehicle (in terms of pitch, roll and yaw), the speed of the vehicle, the suspension height of the vehicle, and the status of the vehicle's transmission, for example, whether the vehicle is in gear, and which gear is selected. Furthermore, the central controller 30 is able to issue commands via the on-board data network to control certain components of the vehicle 1 such as an active suspension system and a transmission system of the vehicle.

The primary 10, 11 and secondary sensor sets are differentiated by how they detect the presence of water, and water depth. The primary sensor set 10, 11 can detect water depth remotely at a distance away from the sensor, and furthermore, can detect water depth at a number of different locations. In contrast, each of the secondary sensors 20, 21, 22, 23 require a direct interaction with water to detect its presence. In the present embodiment, the location of each secondary sensor on the vehicle body corresponds to the location at which the water is detected. An approximation of water depth can therefore be determined by registering which of the secondary sensors are in contact with water, and which are not.

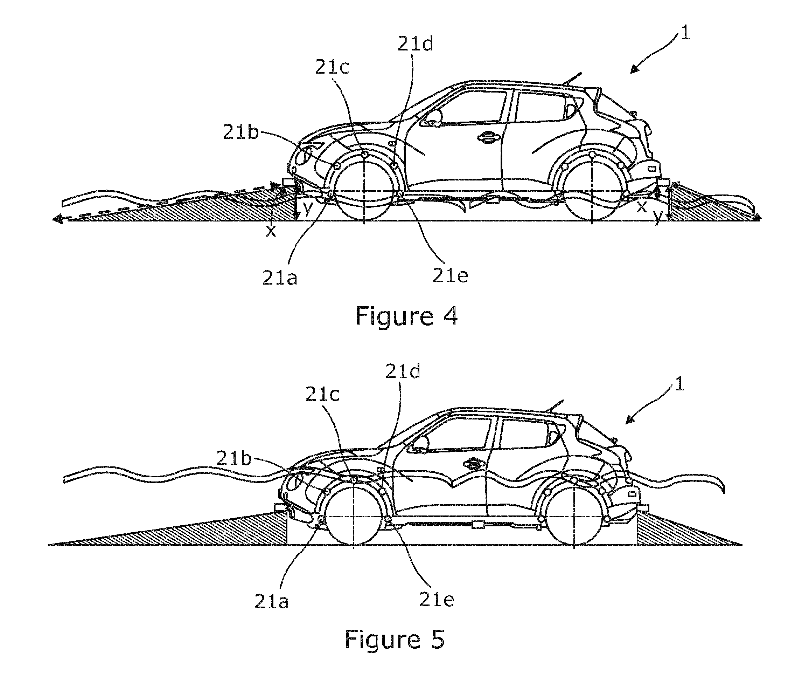

For example, referring to Figure 1, the float switches in the wheel arches are situated at different heights from the ground. As can be seen in the front near-side wheel arch shown in Figure 1, a first pair of float switches 21a, 21e are the closest to the ground, followed by a second pair 21b, 21d at an intermediate position followed by a third float switch 21c at the apex of the wheel arch. If the first pair 21a, 21e and second pair 21b, 21d of float switches detect water, but the third float switch 21c does not, it can be inferred that vehicle is partially submerged within a course of water to a level just below the apex of the front near-side wheel arch. Other examples are shown in Figures 4 and 5. Figure 4 shows a schematic side view of the road vehicle of Figure 1 within a relatively shallow water course with only the first pair of float switches 21a, 21e immersed whereas Figure 5 shows the road vehicle within a relatively deep water course where all of the wheel arch float switches are immersed.

Referring back to Figure 1, although only the front near-side wheel arch sensors are labelled, it will be appreciated that there is a similar arrangement of float switches in the other wheel arches. This enables the lie of the vehicle 1 within a body of water to be determined. For example, if the float switches in the two front wheel arches detect water, but those in the two rear wheel arches do not, then this indicates that the front of vehicle has started to enter into a body of water, and is most likely pitched forward along a slope. Similarly, if the float switches in the pair of near-side wheel arches detect water, but those in the off-side wheel arches do not, then this indicates roll with the off-side of the vehicle being higher than the near-side, the near-side being immersed in water, perhaps due to the camber of a road that has flooded. Such orientation determinations can be validated by cross-checking against the orientation as detected by the vehicle's orientation sensor. The current level of the vehicle's submergence can also be validated by cross-checking the secondary sensor readings against one another. This can help alleviate the effects of false positives. In addition, the signals from the secondary sensor set can together detect the occurrence of an uneven volume of water distributed about the vehicle, for example as caused by a flowing body of water such a stream, or as a result of the passage of the vehicle's movement through the water. In the latter case, water will be displaced and disrupted as the vehicle 1 is driven through it, and the dynamic movement of the water can be detected, and used to predict how the volume of water surrounding the vehicle 1 is likely to change over time. Of particular use is being able to infer the occurrence of a bow wave which forms in front of the vehicle 1 as it is moving forward through the water, and generally travels in the same direction as the vehicle 1. The peak of a bow wave is higher than the standing level of water, and so if the vehicle is close to its water depth limit, it can be important to ensure that the vehicle 1 does not close the distance to the bow wave. Moreover, trailing behind the peak of the bow wave is a corresponding trough, which tends to be lower than the standing level of water. Thus, whilst it can be desirable to maintain a distance away from the crest of the bow wave, it can also be beneficial to follow it at a rate that positions the trough underneath the vehicle - in particular underneath the water-vulnerable parts of the vehicle such as the air intake.

The secondary sensors can detect the occurrence of such a bow wave by comparing the detected water depth at the very front of the vehicle with those further back, and moreover how the relative difference changes over time. Such information can be used by the central controller 30 to control the vehicle's speed to avoid the crest of the bow wave and also to take advantage of the following trough. Such control can be automatic via the transmission system of the vehicle, or may be as a result of the way the driver controls the vehicle in response to guidance issued by the user interface 40 as will be described below.

So far, the secondary sensors have been described which detect the extent of the vehicle's immediate submergence in a body of water. However, it also particularly useful to be able to detect water depth at locations near to but spaced from the vehicle, especially those location within the vehicle's path of travel. From this, it is possible to better predict water dynamics relative to the vehicle, and to what extent the vehicle will be submerged if the vehicle travels toward one those locations. As alluded to above, this is achieved by detecting water depth at positions remote from the vehicle using the primary sensor set 10, 11.

To further expand, the primary sensor set 10, 11 comprise bathymetric LIDAR sensors which utilise a light transceiver to transmit light to, and receive light from the surrounding environment to detect the range to targets such as the top surface of the water, and also the ground surface below the water.

Light beams are transmitted in a predetermined direction away from the sensor, and so the range to a target at a specific location spaced away from the sensor can be determined by measuring the time for the transmitted light signal to return to the receiver. As the placement of each primary sensor is fixed relative to the vehicle, the range to the target relative to the vehicle can also be determined.

Each LIDAR sensor 10, 11 emits two different frequencies of light, the first being within the green spectrum which is capable of penetrating the water to detect the range to a ground surface below the water. A second frequency of light in the infrared spectrum detects the range to the top surface of a course of water. Thus, the difference between the time taken for the light to be returned from the top surface of the water and the time taken for the light to be returned from the ground surface below the water allows water depth at a location to be determined. Thus, it is possible to determine in advance whether it is safe for the vehicle to proceed to that location. Furthermore, each LIDAR sensor is able to vary the direction in which the ranging light is transmitted, and so it is possible to determine water depth at a number of different locations by very quickly scanning an area in the vicinity of the vehicle 1. Advantageously, this enables a water map to be built up of an area in front of and behind the vehicle 1, not only of the water depth, but also of the ground terrain below the surface of the water which may contain obstacles that are otherwise invisible to a driver.

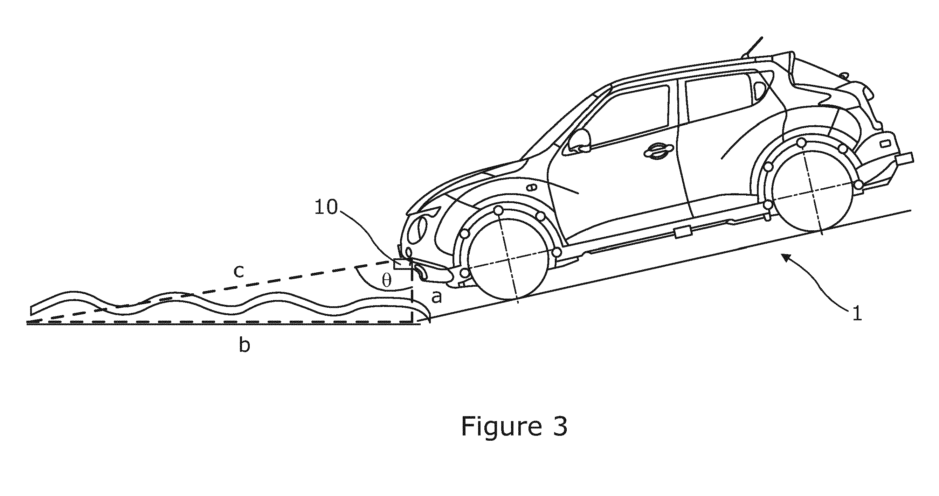

As a specific example, reference is made to Figure 3 in which is shown a schematic side view of the road vehicle of Figure 1 on a down-hill approach to a relatively shallow water course. The front LIDAR sensor 10 is able to scan locations over an area in front of the vehicle stretching over a distance "b" which is within a water course even though the vehicle 1 has not entered that water course. Specifically, the front LIDAR sensor 10 is able to detect the range to one particular location close to the vehicle 1 that is along the ground (but below the water) by angling the transmitter downward along the direction as indicated by dashed line "a". The angle can then be varied to point along direction "c", detecting the range to the ground below the water at another location spaced further from the vehicle 1. In addition, the range to the top surface of the water at various locations can also be determined. Thus, the distances corresponding to the water depth at various locations along "b", and how far the water depth at that location is away from the vehicle is can be calculated using simple trigonometric principles. Furthermore, additional data, such as the known orientation of the vehicle 1, and the assumption that the top surface of the water is substantially level can be used to validate such calculations.

The information from the primary and secondary sensor sets is processed via the central controller 30 together with other data available on the on-board data network and used to determine the current status of the vehicle 1 and predict the future status of the vehicle at the scanned locations . This information is then used to provide feedback to the vehicle driver via the user interface 40, and also optionally, to automatically control the vehicle 1. For example, in response to detecting the occurrence of a body of water having a predetermined depth, the active suspension of the vehicle may be automatically controlled so as to increase the height of the chassis away from the ground. Another example is the central controller 30 automatically engaging the vehicle brakes and/or disengaging the gear on detection that the vehicle 1 is travelling at a speed and heading that would result in the water depth limit of the vehicle 1 being exceeded.

The user interface 40 is in the form of an electronic display screen located on the dashboard which provides a visual representation of the determinations made by the central controller 30. The electronic display screen is touch-sensitive, and so can also receive user inputs to change settings associated with what information is displayed, how it is displayed, and also how and whether the central controller 30 should automatically control the vehicle 1 in response to detected environmental conditions. It will be appreciated that the driver may prefer to manually control the vehicle 1.

The electronic display screen displays calculated water depth at the first and second locations in a way that allow the driver to make an informed decision how to control the vehicle through a body of water. In particular, the electronic display screen communicates to the driver whether a water depth limit will be reached at a certain position relative to the vehicle, and guides and warns the user of the risks of driving the vehicle along a particular route through the water.

A traffic-light colour-scheme is employed, with green representing little or no risk, orange representing a significant water level risk, and red representing a no-go area that is likely to cause damage to the vehicle. These colours are placed on-screen at positions relative to a representation of the vehicle, the relative positioning corresponding to the actual relative position between the vehicle 1 and the locations at which water depth has been detected. This defines a water depth map allowing the driver to quickly see the current submergence level of the vehicle and also whether there is a safe route through a body of water. Additional information that can also be displayed includes the difference between the current water depth, and the water depth limit of the vehicle, whether obstacles or other submerged hazards exist, the orientation of the vehicle relative to the water surface and ground below, and the detected dynamic water conditions. The information presented by the user interface 40 may be numerically and/or diagrammatically represented.

In addition, if the vehicle travels to a position where it is no longer safe to proceed further, the user interface 40 can also provide guidance to the driver about how best to retreat. In particular the user interface 40 can indicate a suitable route to guide the vehicle 1 based on the calculated water depth and terrain detected around the vehicle 1.

To this end, the user interface 40 also provides audio feedback to the vehicle driver. This is intuitively similar to that generated by parking assistance systems that employ an ultrasound-based ranging system. A series of chirps, or beeps are issued, the time between chirps being representative of the proximity to a hazard or obstacle. In particular, the greater the time interval between chirps, the further away the hazard is. Therefore, this provides a particularly intuitive way to guide the driver through a water course where hazards such as deep water or large submerged obstacles present a navigation challenge.

Thus, in use, the combination of sensors, controller and user interface allow an assessment to be made of the conditions of the environment surrounding the vehicle to assist the driver in determining whether it is advisable to continue along a current route through a body of water. Furthermore, assistance is provided to the driver by indicating alternative routes that minimises any adverse effect caused to the vehicle by water. To the same end, it is also possible for the road vehicle to autonomously control the behaviour of its components in response to the detected or predicted conditions.

### Alternatives, improvements and definitions

It should be noted that the term "water" used herein includes mixtures of water with mud, oil and other substances. Furthermore, it will be appreciated that the capabilities of the present invention are applicable to or can be adapted for environmental conditions other than simple flooding. For example, when driving though deep snow, the primary sensors may be able to detect obstacles or hazards submerged below the snow.

It should also be noted that the locations spaced from the vehicle at which water depth is detected are locations along the ground over which the vehicle is to travel. In most cases, the ground is assumed to support the weight of the vehicle - however, this may not entirely be the case with soft muddy ground. In such a case, the previously predicted submergence of the vehicle (as detected by the primary sensor set) may be compared to the current submergence (as detected by the secondary sensor set) at a particular location to detect how soft the ground is, and so to correct future predictions.

In alternatives, the sensor sets referred to above may be a single sensor, or multiple sensors. For example, the front LIDAR sensor 10 is said to scan multiple location in an area in front of the vehicle 1. Instead of one sensor scanning that entire area, multiple LIDAR sensors could instead be used to cover different parts of that area. Similarly, at a particular location - for example, about a wheel arch - rather than using multiple secondary sensors at different levels from the ground, a single secondary sensor may instead be used. For example, a single pressure transducer can be used to detect water depth at a location instead of multiple float switches. In such an alternative, it will be appreciated that steps may need to be taken to compensate for pressure variations caused by water movement relative to the transducer- for example, via housing the transducer within an appropriate housing.

In the embodiment described above, the secondary sensors are in the form of float switches. These are useful as they utilise buoyancy to detect the presence of water, which reduces the chance of false positives. However, in alternatives, different sensors may be used, such as electrode sensors that detect the presence of water via registering an electrical pathway through the water. These are useful as they are relatively small and cheap when compared to sensors such as float switches or pressure transducers.

Further alternatives will be apparent to those skilled in the art when considering the invention as defined by the claims:

## Claims

1. A road vehicle (1) comprising a primary sensor set (10, 11) arranged to detect water depth at a first set of locations within an environment external to the vehicle, the locations being spaced relative to the vehicle so that the extent of the vehicle's submergence at the first set of locations can be predicted before the vehicle travels to at least one of the first set of locations, and wherein the first set of locations includes a plurality of locations that are spaced relative to one another.

2. The road vehicle of claim 1, wherein the first set of locations are substantially in front of the vehicle, within the vehicle's path of forward travel.

3. The road vehicle of any preceding claim, wherein the first set of locations are distributed either side of the vehicles path of forward travel, within the vehicle's forward turning path.

4. The road vehicle of any preceding claim , wherein the first set of locations are distributed substantially behind the vehicle, within the vehicle's reverse path of travel and also either side of the vehicle's reverse path of travel within the vehicle's reverse turning path.

5. The road vehicle of any preceding claim, wherein the first set of locations are distributed over a first area to enable a water depth map of that first area to be determined.

6. The road vehicle of any preceding claim, wherein the first set of locations are distributed over a first area to enable a topological map of a ground surface at that first area to be determined.

7. The road vehicle of any preceding claim, wherein the primary sensor set (10, 11) comprises bathymetric sensors.

8. The road vehicle of any preceding claim, wherein the primary sensor set (10, 11) comprises at least one of LIDAR sensors and ultrasonic sensors.

9. The road vehicle of any preceding claim, comprising a secondary sensor set (20, 21, 22, 23) arranged to detect water depth at a second set of locations on or immediately adjacent to the vehicle so that the immediate extent of the vehicle's submergence can be determined.

10. The road vehicle of claim 9, wherein the second set of locations includes a plurality of locations that are distributed substantially about the vehicle to enable the orientation of the vehicle's submergence below a surface of water to be determined.

11. The road vehicle of any preceding claim, wherein the primary and/or secondary sensor set (10, 11; 20, 21, 22, 23) are arranged to detect the occurrence, extent, position and/or movement of a bow wave relative to the vehicle.

12. The road vehicle of any preceding claims, further comprising a user interface (40) arranged to provide feedback to the vehicle driver in dependence on the determined water depth at said first and/or second set of locations.

13. The road vehicle of any preceding claim, further comprising a controller (30) arranged to control at least one of a speed, a gear and a suspension height of the vehicle in response to the determined water depth at said first and/or second set of locations.

14. The road vehicle of any preceding claim, comprising an orientation sensor arranged to detect the orientation of the vehicle, said detected orientation being used to enhance the calculation of water depth at said first and/or second set of locations.

15. A water depth detection system for a road vehicle comprising a primary sensor set arranged to detect water depth at a first set of locations within an environment external to the vehicle, the locations being spaced relative to the vehicle so that the extent of the vehicle's submergence at the first set of locations can be predicted before the vehicle travels to at least one of the first set of locations.

16. A method for use on a road vehicle, comprising providing a primary sensor set (10, 11) onto a road vehicle so that the primary sensor set can detect water depth at a first set of locations within an environment external to the vehicle, the locations being spaced relative to the vehicle so that the extent of the vehicle's submergence at the first set of locations can be predicted before the vehicle travels to at least one of the first set of locations.
